# EUROPÄISCHE PATENTSCHRIFT

(11) **EP 0 399 426 B1**
(45) Veröffentlichungstag und Bekanntmachung des Hinweises auf die Patenterteilung: **04.08.1993**
(21) Anmeldenummer: 90109574.5
(22) Anmeldetag: 19.05.1990
(51) Int. Cl.: E21B 49/08, E21B 43/08, G01N 1/10, E03B 3/18

(54) **Verfahren und Vorrichtung zur Herstellung von unverfälschten Wasserproben beim Niederbringen eines Brunnens durch Bohren**
Method and apparatus for taking uncontaminated water samples from a well by drilling
Procédé et dipositif pour prendre des échantillons d'eau pure d'une source par forage

(30) Priorität: 18.12.1989 DE 3941763; 23.05.1989 DE 3916731
(43) Veröffentlichungstag der Anmeldung: 28.11.1990
(73) Patentinhaber: Universale-Bau GmbH, D-81319 München (DE)
(72) Erfinder: Grotendorst, Gerhard, D-4280 Borken (DE)
(74) Vertreter: Herrmann-Trentepohl, Werner, Dipl.-Ing.

(56) Entgegenhaltungen:
- EP-A- 0 062 022
- DE-A- 3 309 031
- DE-U- 8 502 093
- US-A- 4 315 542

## Beschreibung

Die Erfindung betrifft ein Verfahren zur Herstellung von unverfälschen Flüssigkeitsproben beim Niederbringen eines Brunnens durch Bohren mit Hilfe eines Bohrflüssigkeit führenden Hohlgestänges, dessen Züge aus Vollmantelrohren und wenigstens einem perforierten Rohrzug bestehen, wobei das Niederbringen der Bohrung bis zum ersten interessierenden Horizont mit geschlossenem Perforationsrohr durchgeführt und die erste Probe gewonnen wird, worauf nach Schließen der Perforation weitergebohrt wird, bis der nächste interessierende Horizont angefahren ist, aus dem eine zweite Probe nach Wiederöffnen der Perforation entnommen wird. Außerdem betrifft die Erfindung eine Vorrichtung zur Durchführung dieses Verfahrens.

Nach dem erfindungsgemäßen Verfahren werden z. B. aus kontaminierten Böden Wasserproben gewonnen, welche aus einem wasserführenden Horizont stammen, der mit der Bohrung angefahren worden ist, wobei aber die Proben von den Verfälschungen frei sind, die durch das Abpumpen der Proben durch das Hohlgestänge und das Bohrloch in die Wasserproben gelangen können, sobald diese den wasserführenden Horizont verlassen haben. Solche Verfälschungen beruhen in der Regel auf Teilen der Bohrlochspülung, welche aus dem umgebenden Gebirge bzw. aus bereits durchteuften wasserführenden Horizonten zusitzende Wässer aufgenommen hat und deswegen unter anderem bei kontaminierten Böden ihrerseits verfälschende Substanzen, z. B. Kontaminationen enthält.

Ein gattungsgemäßes Verfahren ist aus der DE-A-33 09 031 bekannt. Das dort beschriebene Bohrgerät weist ein perforiertes Tragrohr auf, welches innen mit einem Filterelement und einem Ventil ausgerüstet ist. Das Ventil wird über ein Ausführungselement gesteuert. Nachteilig ist es bei diesem Bohrgerät, daß beim Gewinnen von Flüssigkeitsproben stets Spülung mit gewonnen wird. Desweiteren kann sich der Ventilsitz derart zusetzen, daß die Öffnungen im Ausführungselement nicht mehr über die Öffnungen eines Innenrohrs gebracht werden können, so daß keine Flüssigkeitsproben mehr gewonnen werden können. Schließlich hat es sich gezeigt, daß sich der integrierte Filter relativ schnell zusetzt, so daß das Gestänge in regelmäßigen Abständen zum Erneuern des Filters gewechselt werden muß.

Das erfindungsgemäße Verfahren erlaubt die Unterdrückung solcher Verfälschungen des Probenwassers und damit die Beurteilung, aus welchen Proben welche Wasserqualitäten zu erwarten sind

Das beruht im wesentlichen auf dem vor jeder Probe in den Ringraum zwischen dem Bohrgestänge und dem Bohrloch eingebrachten, im wesentlichen hohlzylindrischen Filtersandkörper, durch den das Probewasser abgepumpt wird. Dieser Filtersandkörper hält nämlich mit seinem oberen, ein Vollmantelrohr des Hohlgestänges umgebenden Abschnitt Feststoffteile aus der Spülung fest und setzt sich dadurch zu, wodurch eine natürliche Ringdichtung gegen den wasserführenden Horizont entsteht, in dem das Gestängeperforationsrohr steht. Deshalb wird nach dem erfindungsgemäßen Verfahren der beschriebene Filtersandkörper beim Abpumpen des Probenwassers aus dem Bohrloch über eine gewisse Zeitspanne eingearbeitet, bis die erwähnte Ringdichtung entstanden ist und klares Wasser aus dem angefahrenen Horizont erscheint. Der Filtersand wird dabei von dem Gestänge zurückgehalten. Dieses Verfahren ist seinem Grundsatz nach bereits bekannt (PCT-Anmeldung WO 88/0 43 52). Wenn nach diesem Verfahren mehrere übereinanderliegende Grundwasserhorizonte untersucht werden sollen, hat das Gestänge im Abstand der wasserführenden Schichten eine Vielzahl von Gestängeperforationsrohren, unter denen jeweils eine mit dem Bohrlochstoß versperrbare Auffangvorrichtung angeordnet ist, welche durch das Anheben des Gestänges ausgefahren wird und dann den eingebrachten Filtersand zurückhält, so daß die erwähnten hohlzylindrischen Filtersandkörper aufgebaut werden können.

Dieses vorbekannte Verfahren läßt sich in der Regel nur mit zwei Gestängen ausführen, die wechselseitig oder nacheinander in das Bohrloch eingefahren werden müssen. Das zum Probeziehen erforderliche Gestänge ist relativ kompliziert aufgebaut und setzt die Kenntnis der Abstände der wasserführenden Horizonte voraus, um die Perforationsgestängerohre in den richtigen Abständen für die Herstellung der Filtersandkörper anordnen zu können. Im allgemeinen wird man daher nach diesem Verfahren zunächst die Brunnenbohrung ganz oder zum Teil auffahren und danach erst das mit den Perforationsgestängerohren versehene Gestänge einfahren. Das ist aus organisatorischen Gründen an sich schon nachteilig und liefert leicht falsche Ergebnisse, wenn man im unbekannten Boden zu bohren hat und nicht weiß, wie tief die Bohrung abgeteuft werden muß, um auf einen wasserführenden Horizont zu treffen, der Wasser geeigneter Qualität und Menge liefert.

Der Erfindung liegt die Aufgabe zugrunde, das vorbekannte Verfahren derart weiterzubilden, daß ein Ziehen des Gestänges auf ein Mindestmaß beschränkt wird, jedoch gleichwohl unverfälschte Wasserproben gewonnen werden.

Diese Aufgabe wird erfindungsgemäß dadurch gelöst, daß ein Wasserbrunnen erstellt wird, in den für jede Probennahme Filtersand eingebracht wird, der nach der Probennahme wieder ausgetragen wird, wobei über dem Bohrwerkzeug ein Perforationsgestänge angeordnet ist, in das wahlweise ein die Perforation des Perforationsgestänges abdichtender Vollmanteleinsatz oder, wenn eine Wasserprobe gewonnen werden soll, ein Rohreinsatz , der Perforationen aufweist, eingefahren und wieder entfernt werden kann, ohne das Bohrgestänge zu ziehen.

Gemäß der Erfindung wird das Bohrgestänge selbst außer zum Auffahren der Probebohrung zum Abpumpen der Wasserproben durch die hohlen Gestängezüge verwendet. Es hat sich nämlich überraschend herausgestellt, daß der eingangs beschriebene hohlzylindrische Filtersandstopfen, der für die Gewinnung der unverfälschten Wasserproben erforderlich ist, mit der Bohrlochspülung zerstört wird, sobald das Gestängeperforationsrohr verschlossen und weitergebohrt wird. Dadurch ist es möglich, in jedem von oben nach unten nacheinander angefahrenen wasserführenden Horizont die Bohrung anzuhalten, sobald das Gestängeperforationsrohr in dem wasserführenden Horizont angelangt ist und nunmehr den Filtersandkörper ohne eine besondere Auffangvorrichtung einzuschütten, was das Bohrgestänge weiter vereinfacht.

Sodann wird der Vollmanteleinsatz gezogen und der perforierte Rohreinsatz in das Bohrgestänge eingesetzt bzw. eingefahren. Ein Ziehen des Bohrgestänges ist nicht mehr erforderlich.

Die Erfindung hat den Vorteil, daß nach dem von ihr vorgeschlagenen Verfahren unverfälschte Wasserproben während des Niederbringens der Brunnenbohrung bedarfsweise gewonnen werden können, was ohne Ziehen des Gestänges möglich ist. Dadurch werden die Bohrarbeiten vereinfacht und wesentlich beschleunigt. Man kann nach dem erfindungsgemäßen Verfahren Brunnen von zunächst unbekannter Teufe auffahren bis man an einen wasserfürenden Horizont gelangt ist, der Wasser geeigneter Qualität und Menge liefert. Das erfindungsgemäße Verfahren eignet sich daher besonders gut als Untersuchungsverfahren für unbekannte Böden mit gegebenenfalls nicht bekannten Belastungen durch kontaminierend wirkende Substanzen.

Die Einzelheiten, weiteren Merkmale und andere Vorteile der Erfindung ergeben sich aus der nachfolgenden Beschreibung zweier Ausfürungsformen einer Vorrichtung zur Durchführung des beschriebenen Verfahrens gemäß der Erfindung.

Es zeigen:
- Fig. 1: schematisch und teilweise im Längsschnitt unter Fortlassung aller für das Verständnis der Erfindung nicht erforderlichen Einzelheiten eine erste Ausführungsform der Erfindung im Längsschnitt,
- Fig. 2: in gegenüber der Darstellung der Fig. 1 vergrößerter Wiedergabe ein Perforationsgestängerohr gemäß der Erfindung für die Durchführung des Bohrbetriebes,
- Fig. 3: in der Fig. 2 entsprechender Darstellung des Perforationsgestängerohres für die Durchführung einer Wasserprobennahme,
- Fig. 4: den Gegenstand der Fig. 3 in vergrößerter Darstellung zur Wiedergabe einer Einzelheit des Perforationsgestängerohres,
- Fig. 5: eine andere Ausführungsform der Erfindung, im wesentlichen der Fig. 1 entsprechenden Darstellung, jedoch unter Fortlassung des Bohrwerkzeuges,
- Fig. 6: eine Fangvorrichtung für den Gegenstand der Fig. 5,
- Fig. 7: die im Bohrgestänge befindliche Fangvorrichtung nach Fig. 2,
- Fig. 8: einen Vollmantelrohreinsatz gemäß der Erfindung für die Ausführungsform nach den Fig. 1 bis 3.

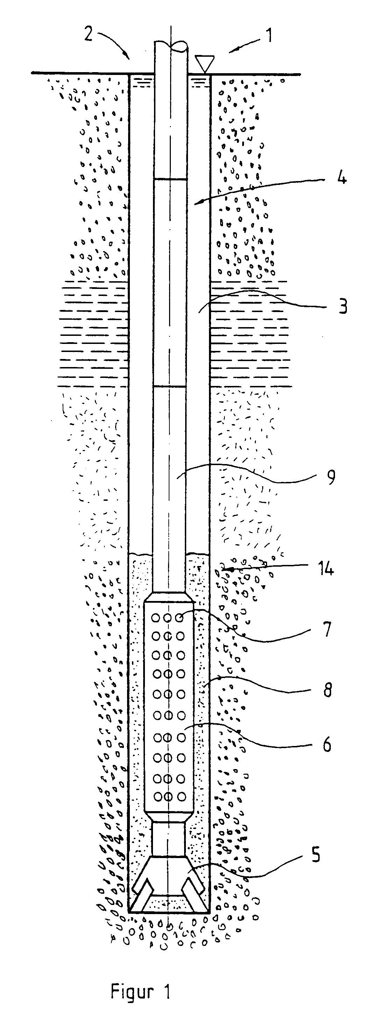

Die aus Fig. 1 ersichtliche Bohreinrichtung, die gleichzeitig zur Gewinnung unverfälschter Wasserproben dient, ist allgemein mit (1) bezeichnet und fährt ein Bohrloch (2) auf. Zwischen dem Bohrlochstoß (3) und dem Bohrgestänge (4) verbleibt ein Ringspalt. Er entsteht durch die Durchmesserdifferenz des Bohrwerkzeuges (5) und des Bohrgestänges (4). Das Bohrwerkzeug (5) ist unmittelbar unterhalb eines Perforationsgestängerohres (6) angeordnet.

Die Perforationen (7) sind in einer Vielzahl von horizontalen und vertikalen Reihen angeordnet und durchsetzen den Rohrmantel im wesentlichen radial. Ein im wesentlichen hohlzylindrischer Filtersandkörper (8) füllt den Ringraum zwischen dem Perforationsgestängerohr (6) und dem Bohrlochstoß (3) bis zur Sohle des Bohrloches aus. Er reicht bis zu dem letzten Vollmantelgestängezug (9) des Bohrgestänges.

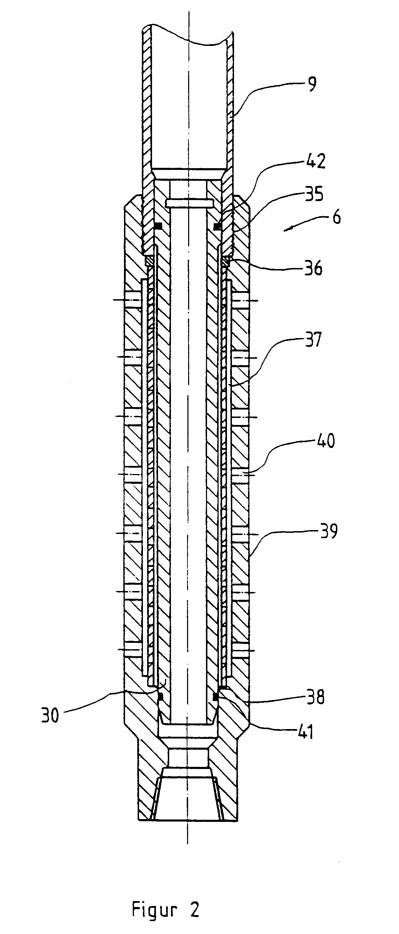

In der Ausführungsform nach Fig. 2 ist das Gestängeperforationsrohr (6) mit seinem oberen Ende mit dem anschließenden Vollmantelgestängezug (9) bei (35) verschraubt. Mit einem Sprengring (36) wird ein vorzugsweise aus Kunststoff bestehendes Filterrohr (37) in dem Perforationsgestängezug (6) gehalten. Das Filterrohr (37) stützt sich auf einem inneren Ringbund (38) des Perforationsgestängezuges (6) ab. Sein Innendurchmesser entspricht dem Innendurchmesser des Hohlgestänges. Die beschriebene Anordnung hat den Vorteil, daß die den Rohrmantel (39) schwächenden Perforationen (40) des Perforationsgestängezuges nur eine verhältnismäßig geringe freie Öffnung aufzuweisen braucht und diesen nicht übermäßig schwächen. Der Filterrohreinsatz (37) hat dagegen die verhältnismäßig große offene Fläche der für den Filterrand erforderlichen Feinschlitze und eine verhältnismäßig geringe Stabilität, die jedoch durch den Verbund mit dem Perforationsrohr soweit gesteigert ist, daß die auftretenden Kräfte aufgenommen werden können.

Die Fig. 2 zeigt den eingeschobenen Vollmantelrohreinsatz (30), welcher an seinem oberen und unteren Ende je eine O-Ringdichtung (41, 42) trägt. Dadurch ist gewährleistet, daß die Bohrlochspülung Perforationen (40) des Gestängeperforationsrohres (6) nicht durchqueren kann, so lange der Bohrbetrieb besteht.

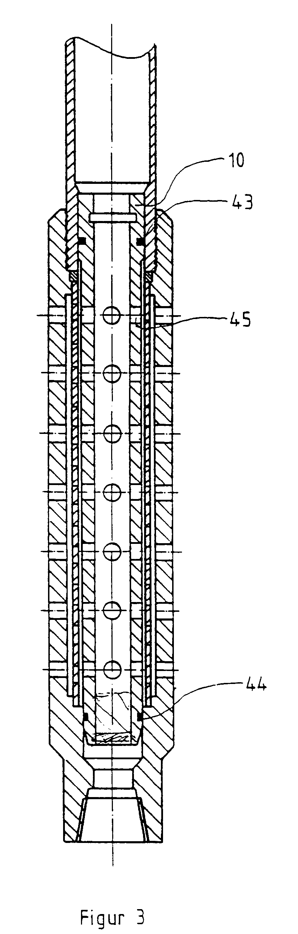

Die Fig. 3 zeigt dagegen den eingesetzten Perforationsrohreinsatz (10), welcher ebenfalls am oberen und unteren Ende je eine O-Ringdichtung (43, 44) mitbringt. Die Perforationen (45) entsprechen nach Größe und freier Fläche dem Filtersand.

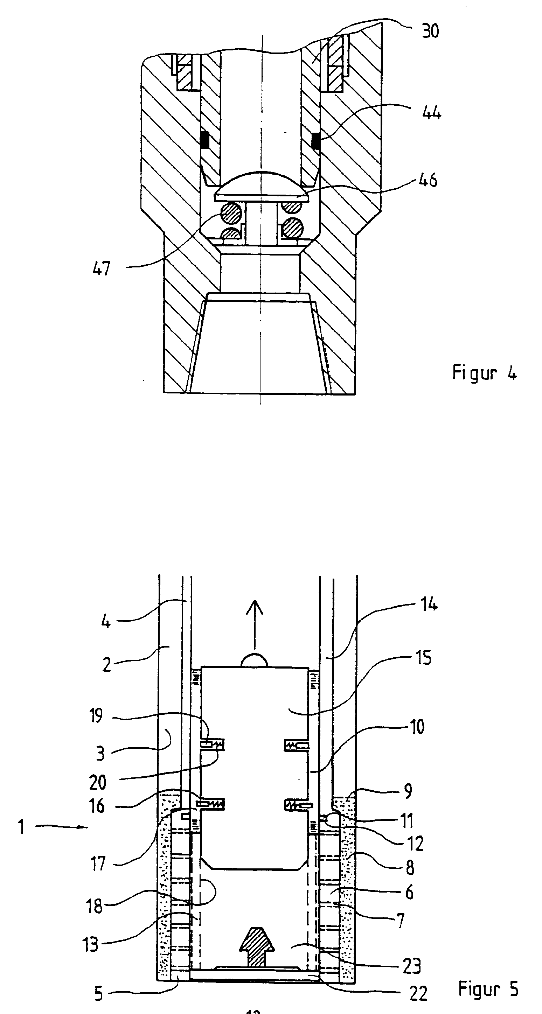

Wie die Fig. 4 erkennen läßt, läßt der eingeschobene Vollmantelrohreinsatz (30) die Öffnung des Rückschlagventilkörpers (46) unter Belastung durch die Ventilfeder (47) zu, sobald die Bohrlochspülung durch das Bohrgestänge auf den Ventilkörper (46) drückt.

In der Ausführungsform nach den Fig. 5 bis 8 liegt auf der Innenseite des Perforationsgestängerohres (6) ein Perforationsrohreinsatz (10), der den Filtersand zurückhält, so daß nur vom Filtersand freies Wasser in das Innere des Bohrgestänges (4) eindringen kann, sobald eine nicht dargestellte Pumpe das Wasser zutage hebt.

Der Perforationsrohreinsatz (10) und das Perforationsgestängerohr (6) sind über Rastbolzen (11) und einer Halterung (12) miteinander verbunden, so daß der genaue Sitz des Perforationsrohreinsatzes (10) im Gestängeperforationsrohr (6) gewährleistet ist. Im Perforationseinsatz (10) sind Öffnungen (13) vorgesehen, und zwar im dergestellten Beispiel nach Fig. 5 Längsschlitze von etwa 0,5 mm Breite, so daß der entsprechend gröbere Filtersand des Filtersandkörpers (8) wirksam zurückgehalten wird.

Im Übergangsbereich (14) zwischen dem Gestängeperforationsabschnitt (6) und dem Vollmantelgestängerohr (9) ist die Fangvorrichtung (15) dargestellt, mit deren Hilfe der Perforationsrohreinsatz (10) wieder entfernt werden kann, um den aus weiteren Figuren ersichtlichen Vollmantelrohreinsatz dort einzubringen, wenn die Bohrarbeiten aufgenommen werden sollen.

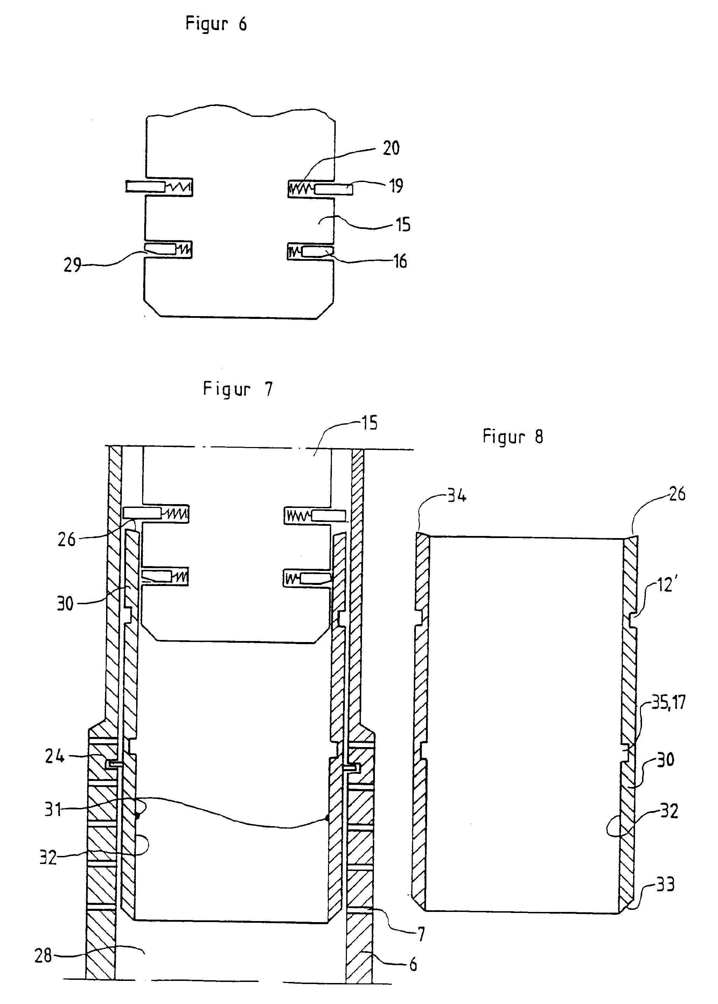

Die Fangvorrichtung (15) weist Zugbolzen (16) auf, die entsprechend den Ausnehmungen (17) in der Innenwand (18) des Perforationsrohreinsatzes (10) einrasten und über die die Fangvorrichtung (15) in der Lage ist, den gesamten Perforationsrohreinsatz (10) durch das Bohrgestänge (4) hindurch herauszuheben. Am oberen Ende sind Einbaubolzen (19) vorgesehen, die ebenso wie die Zugbolzen (16) über Federn (20) belastet sind, so daß diese jeweils in Richtung Perforationsrohreinsatz (10) verschoben werden und eine genaue Führung bzw. ein genaues Einrasten ermöglichen. Die Funktion der Einbaubolzen wird anhand der Fig. 7 noch weiter erläutert.

Am unteren Ende des Perforationsrohreinsatzes (10) ist ein Verschluß (22) vorgesehen, der dazu dient, das zu untersuchende Wasser nicht unbeabsichtigt unter Umgehung des Filtersandkörpers ins Gestängeinnere (23) strömen zu lassen. Der Verschluß (22) wirkt wie ein Rückschlagventil.

Fig. 6 zeigt eine Fangvorrichtung mit Zugbolzen (16) und Einbaubolzen (19). Die beiden Bolzen (16, 19) sind über Federn (20) belastet. Sie ragen aus den entsprechenden Bohrungen oder Ausschnitten vor, wenn sie nicht durch die Innenwand des Perforationsrohreinsatzes (10) bzw. des Vollmantelrohreinsatzes daran gehindert sind. Mindestens die Zugbolzen (16) sind auf der zum Bohrlochtiefsten (28) weisenden Seite mit Abschrägungen (29) versehen, um derart das Einfahren der Fangvorrichtung (15) in den Perforationsrohreinsatz (10) bzw. den Vollmantelrohreinsatz (30) sicherzustellen, wobei sie zunächst einmal zurückweichen und erst dann in die zugeordnete Ausnehmung (17) in der Innenwand (18) des Perforationsrohreinsatzes (10) bzw. des Vollmantelrohreinsatzes (30) einrasten, sobald dies erforderlich ist.

Fig. 7 zeigt den unteren Bereich des Bohrgestänges (4), wobei unmittelbar über der Fangvorrichtung (15) der Vollmantelrohreinsatz (30) in den Bereich des Gestängeperforationsrohres (6) eingeschoben wird. Über diesen Rohreinsatz (30) werden dann die Perforationen (7) im Perforationsgestängerohr (6) verschlossen. Sobald die Kugelbolzen (24) in der Innenwand des Gestängeperforationsrohres (6) in die Nut (12') eingerastet sind, hat der Vollmantelrohreinsatz (30) seine vorgeschriebene Stellung erreicht. Um dies sicherzustellen, drückt die Fangvorrichtung (30) über die Einbaubolzen (19) auf den Einsatzrand (26) nach Fig. 8. Dadurch wird der Vollmantelrohreinsatz (30) in jedem Fall in die erforderliche Endposition gebracht.

Soll der in Fig. 8 wiedergegebene Vollmantelrohreinsatz (30) anschließend zurückgewonnen werden, so wird die Fangvorrichtung (15) in den Einsatz abgesenkt und zwar mit eingezogenen oder sich einziehenden Einbaubolzen (19). Sobald die Zugbolzen (16) in die Zugnut (25) einrasten, sind die Einbaubolzen (19), wie aus Fig. 1 ersichtlich, außer Funktion. Die Fangvorrichtung (15) kann zurückgezogen werden, wobei sie den Vollmantelrohreinsatz (30) mitnimmt.

Ein zu weites Einschieben der Fangvorrichtung (15) beispielsweise in den Vollmantelrohreinsatz (30) wird durch die Begrenzung (31) auf der Innenwand (32) verhindert.

Die Ränder (33, 34) des Vollmantelrohreinsatzes (30) sind, wie aus den Fig. 7 und 8 ersichtlich ist, abgeschrägt. Dabei sind die Abschrägungen zweckmäßigerweise umgekehrt ausgebildet, wenn mit einer Vorrichtung gearbeitet wird, in der die Vollmantelrohreinsätze (30) im Bereich des darüber liegenden Vollmantelgestängezuges (9) während der Wasserentnahme festgelegt sind. Bei dieser Ausbildung ist das Heraufholen der Vollmantelrohreinsätze (30) bzw. der Perforationsrohreinsätze (10) nicht erforderlich, wobei auch der Perforationseinsatz (10) und der Perforationsgestängezug (6) eine Einheit bilden.

## Patentansprüche

1. Verfahren zur Herstellung von unverfälschten Flüssigkeitsproben beim Niederbringen eines Brunnens durch Bohren mit Hilfe eines Bohrflüssigkeit führenden Hohlgestänges, dessen Züge aus Vollmantelrohren und wenigstens einem perforierten Rohrzug bestehen, wobei das Niederbringen der Bohrung bis zum ersten interessierenden Horizont mit geschlossenem Perforationsrohr durchgeführt und die erste Probe gewonnen wird, worauf nach Schließen der Perforation weitergebohrt wird, bis der nächste interessierende Horizont angefahren ist, aus dem eine zweite Probe nach Wiederöffnen der Perforation entnommen wird, dadurch gekennzeichnet, daß ein Wasserbrunnen erstellt wird, in den für jede Probennahme Filtersand eingebracht wird, der nach der Probennahme wieder ausgetragen wird, wobei über dem Bohrwerkzeug (5) ein Perforationsgestänge (6) angeordnet ist, in das wahlweise ein die Perforation des Perforationsgestänges (6) abdichtender Vollmanteleinsatz (30) oder, wenn eine Wasserprobe gewonnen werden soll, ein Rohreinsatz (10), der Perforationen (45) aufweist, eingefahren und wieder entfernt werden kann, ohne das Bohrgestänge (4) zu ziehen.

2. Vorrichtung zur Durchführung des Verfahrens nach Anspruch 1, gekennzeichnet durch einen oder mehrere Rohreinsätze (30) des Perforationsgestängerohres (6), welche mindestens einen Perforationrohrseinsatz (10) und einen Vollmantelrohreinsatz (30) aufweisen und durch eine Fangvorrichtung (15) zum Einsetzen und Entfernen der Rohreinsätze (10, 30) in bzw. aus dem Gestängeperforationsrohr durch das Hohlgestänge (4).

3. Vorrichtung nach Anspruch 2, dadurch gekennzeichnet, daß das untere Ende des Gestängeperforationsrohres (6) ein Absperrorgan (46, 47) für den Hohlraum des Bohrgestänges (4) aufweist, welches bei der Wasserprobenentnahme geschlossen ist.

4. Vorrichtung nach einem der Ansprüche 2 oder 3, dadurch gekennzeichnet, daß das Absperrorgan ein Rückschlagventil (46, 47) ist, welches gegen den Perforationsrohreinsatz (10) schließt.

5. Vorrichtung nach Anspruch 2 und einem der Ansprüche 3 oder 4, dadurch gekennzeichnet, daß in das Gestängeperforationsrohr (6) ein Filterrohr (37) eingesetzt ist, welches den Filtersand zurückhält.

6. Vorrichtung nach Anspruch 2 und wenigstens einem der Ansprüche 3 bis 5, dadurch gekennzeichnet, daß der Innenwand (18) des Gestängeperforationsrohres (6) Halterungen (12) für einen Perforationsrohr- oder Vollmantelrohreinsatz (10, 30) zugeordnet sind und die Halterungen innenseitig mit den Zugbolzen (16) einer Fangvorrichtung (15) korrespondierende Ausnehmungen (17) aufweisen.

7. Vorrichtung nach Anspruch 2 und einem oder mehreren der Ansprüche 3 bis 6, dadurch gekennzeichnet, daß die Halterungen (12) des Perforationsgestängezuges (6) als federbelastete Kugelbolzen (24) und als Nut (12) ausgebildet sind, die den Perforationsrohr-und Vollmantelrohreinsätzen (10, 30) zugeordnet sind, wobei die Fangvorrichtung (15) federbelastete Einbaubolzen (19) aufweist, die mit die Rohreinsätze (10, 30) tragenden Zugbolzen (16) korrespondierend auf den Einsatzrand (26) einwirkend angeordnet sind.

8. Vorrichtung nach Anspruch 2 und einem oder mehreren der Ansprüche 3 bis 7, dadurch gekennzeichnet, daß die Zugbolzen (16) auf dem dem Bohrlochtiefen (28) zugewandten Ende abgeschrägt sind.

9. Vorrichtung nach Anspruch 2 und einem oder mehreren der Ansprüche 3 bis 8, dadurch gekennzeichnet, daß die Rohreinsätze (10, 30) über die Innenwand (32) vorstehende Begrenzungen (31) für die Fangvorrichtung (15) aufweisen.

10. Vorrichtung nach Anspruch 2 und einem oder mehreren der Ansprüche 3 bis 9, dadurch gekennzeichnet, daß die Perforationen im Perforationsgestängerohrabschnitt (6) einen Öffnungsquerschnitt von 8 bis 30 mm und die Öffnungen (13) im Filterrohreinsatz eine Öffnungsdurchmesser von ca. 0,5 mm aufweist.

11. Vorrichtung nach Anspruch 2 und einem oder mehreren der Ansprüche 3 bis 10, dadurch gekennzeichnet, daß die Öffnungen im Filterrohreinsatz als Stütze ausgebildet sind, deren Breite ca. 0,5 mm beträgt.

12. Vorrichtung nach Anspruch 2 und einem oder mehreren der Ansprüche 3 bis 11, dadurch gekennzeichnet, daß die Rohreinsätze (10, 30) im Bohrgestänge verschiebbar angeordnet sind und eine Einheit bilden.

## Claims

1. A method for taking uncontaminated liquid samples during the drilling of a well with the aid of a hollow rod assembly carrying a drilling liquid, the pulls of said hollow rod assembly consisting of full jacket tubes and at least one perforated tube pull, wherein up to the first interesting horizon the drilling is carried out with a closed perforation tube and the first sample is taken, after which upon closing the perforation the drilling is continued until the next interesting horizon has been reached, from which a second sample is taken after the perforation has been reopened,
**characterized in that**
a water well is constructed into which filter sand is fed for each sampling, said filter sand being removed after the sampling, wherein a perforation rod assembly (6) is arranged above the drilling tool (5), wherein alternatively a full jacket insert (30) sealing the perforation of the perforation rod assembly (6) or, if a water sample is to be taken, a tube insert (10) having perforations (45) can be inserted into an removed from said perforation rod assembly without pulling the drilling rod assembly (4).

2. An apparatus for carrying out the method according to claim 1,
**characterized by**
one or several tube insert (30) of the perforation rod assembly (6), said tube inserts including at last one perforation tube insert (10) and one full jacket tube insert (30), and by a gripping device (15) for inserting and removing the tube inserts (10, 30) into or from the rod assembly perforation tube through the hollow rod assembly (4).

3. An apparatus according to claim 2,
**characterized in that**
the lower end of the rod assembly perforation tube (6) comprises a shut-off device (46, 47) for the hollow space of the drilling rod assembly (4), said shut-off device being closed during the taking of the water sample.

4. An apparatus accoridng to any of claims 2 or 3,
**characterized in that**
the shut-off device is a return valve (46, 47) closing against the perforation tube insert (10).

5. An apparatus according to claim 2 and any of claims 3 or 4,
**characterized in that**
a filter tube (37) is inserted into the rod assembly perforation tube (6), said filter tube retaining the filter sand.

6. An apparatus according to claims 2 and at least one of claims 3 to 5,
**characterized in that**
holding devices (12) for a perforation tube or full jacket tube insert (10, 30) are assigned to the interior wall (18) of the rod assembly perforation tube (6) and that the insides of the holding devices are provided with recesses (17) corresponding with the tie bolt (16) of a gripping device (15).

7. An apparatus according to claim 2 and one or several of claims 3 to 6,
**characterized in that**
the holding devices (12) of the perforation rod assembly pull (6) are in the form of a spring-loaded ball pin (24) and a groove (12) which are assigned to the perforation tube and full jacket tube inserts (10, 30), wherein the gripping device (15) comprises spring-loaded insertion bolts (19) which are arranged in such manner that they correspond with the tie bolts (16) carrying the tube inserts (10, 30) and act upon the insert edge (26).

8. An apparatus according to claim 2 and one or several of claims 3 to 7,
**characterized in that**
the ends of the tie bolts (16) facing the depth of the well hole (28) are chamfered.

9. An apparatus according to claim 2 and one or several of claims 3 to 8,
**characterized in that**
the tube insert (10, 30) comprise limit stops (31) protruding from the interior wall (32) for the gripping device (15).

10. An apparatus according to claim 2 and one or several of claims 3 to 9,
**characterized in that**
the perforations in the perforation rod assembly tube section (6) has an opening cross section of 8 to 30 mm and the openings (13) in the fiter tube insert have an opening cross section of ca. 0.5 mm.

11. An apparatus according to claim 2 and one or several of claims 3 to 10,
**characterized in that**
the openings in the fiter tube insert are designed as supports with a width amounting to ca. 0.5 mm.

12. An apparatus according to claim 2 and one or several of claims 3 to 11,
**characterized** in that
the tube inserts (10, 30) are slidably mounted in the drilling rod assembly and form a unit.

## Revendications

1. Procédé pour prendre des échantillons de liquide pures lors du foncement d'un puits par forage, à moyen des tiges creuses aménageant un liquide de forage, les trains des tiges étant constitués par des tubes à parois pleines et au moins un train perforé, le foncement du forage étant éffectué jusqu'au premier horizon interessant avec le tube perforé fermé et le premier échantillon étant tiré, puis, après fermeture de la perforation, le forage étant continu jusqu'à ce que le prochain horizon interessant est atteint, duquel un deuxième échantillon est tiré après re-ouvrage de la perforation,
**characterisé en ce qu'** un puits d'eau est fabriqué, dans lequel du sable de filtration est introduit pour chaque tirage d'échantillon, le sable étant, après tirage d'èchantillon, évacué, des tiges perforées (6) étant disposées au-dessus de l'outillage de forage, un insert à paroie pleine (30) étanchant la perforation des tiges perforées (6) ou, si un échantillon d'eau doit être tiré, un insert de tube (10) présentant des perforations (45) pouvant facultativement être introduits et enlevés dans les/des tiges, sans que le train de tiges (4) soit extrait.

2. Dispositif pour effectuer le procéde selon revendication 1, **characterisée par** un ou plusieurs inserts de tube (30) du tube des tiges perforées (6), présentant au moins un insert du tube perforé (10) et un insert du tube à paroie pleine (30) et par un dispositif d'arrêt (15) pour introduire et enlever les inserts de tube (10,30) dans le / du tube perforé des tiges par les tiges creuses (4).

3. Dispositif selon revendication 2, **characterisée en ce que** l'extremité inférieur du tube perforé des tiges (6) présente un organe d'obturation (46,47) pour la cavité du train de tiges (4), l'organe étant fermé pendant le tirage de l'échantillon d'eau.

4. Dispositif selon l'une des revendications 2 ou 3, **characterisée en ce que** l'organe d'obturation est une soupape de retenue (46,47), qui ferme contre l'insert perforé de tube (10).

5. Dispositif selon revendication 2 et l'une des revendications 3 ou 4, **characterisée en ce que** un tuyau-filtre (37) retenant le sable de filtration est inseré dans le tube perforé des tiges (6).

6. Dispositif selon revendication 2 et au moins l'une des revendications 3 à 5, **characterisée en ce que** des fixations (12) pour un insert perforé de tube ou un insert à paroie pleine de tube (10,30) sont attribuées à la paroie interne (18) du tube perforé des tiges (6), et que les fixations présentent au côté intérieur des creux (17) correspondant avec les boulons tirant (16) d'un dispositif d'arrêt (15).

7. Dispositif selon revendication 2 et l'une ou plusieurs des revendicaitons 3 à 6, **characterisé en ce que** les fixations (12) du train des tiges perforées (6) sont constitués par des boulons à rotule (24) chargés par ressorts et par une rainure (12), qui sont attribués aux insert perforé de tube et insert de tube à paroie pleine (10,30) le dispositif d'arrêt (15) présentant des boulons insérés (19) chargé par ressort, ces boulons étant disposés en correspondant avec des boulons tirant (16) portant les inserts du tube (10,30) et en agissant sur le bord (26) de l'insert.

8. Dispositif selon revendication 2 et l'une ou plusieurs des revendications 3 à 7, **characterisé en ce que** les boulons tirant (16) sont chanfreinés à l'extremité dirigé vers le bas de la forure (28).

9. Dispositif selon revendication 2 et l'une ou plusieurs des revendications 3 à 8, **characterisée en ce que** les inserts de tube (10,30) présente des limitations (31) pour le dispositif d'arrêt (15), les limitations dépassant la paroie interne (32).

10. Dispositif selon revendication 2 et l'une ou plusieurs des revendications 3 à 9, **characterisé en ce que** les perforations dans la partie tube des tiges perforées (6) présentent une section d'ouverture de 8 à 30 mm et que l'ouverture (13) dans l'insert tuyeau-filtre présente un diametre d'ouverture d'environ 0,5 mm.

11. Dispositif selon revendication 2 et l'une ou plusieurs des revendications 3 à 10, **characterisé en ce que** les ouvertures dans l'insert tuyeau-filtre constituent des supports, dont la largeur est environ 0,5 mm.

12. Dispositif selon revendication 2 et l'une ou plusieurs des revendications 3 à 11, **characterisée en ce que** les inserts de tube (10,30) sont disposés de façon deplaçable dans le train de tiges et qu'ils forment une unité.
